# EUROPEAN PATENT APPLICATION

(11) **EP 3 301 202 A1**
(43) Date of publication of application: **04.04.2018**
(21) Application number: 17191294.2
(22) Date of filing: 15.09.2017
(51) Int. Cl.: C23C 10/04, C23C 10/20, C23C 10/30

(54) **METHOD FOR TREATING COATED ARTICLE AND TREATED ARTICLE**

(30) Priority: 28.09.2016 US 201615278815
(71) Applicant: General Electric Company, Schenectady, NY 12345 (US)
(72) Inventor: SRINIVASAN, Dheepa, 560066 Bangalore, Karnataka (IN); KANCHARALA, Kishore, 31411 Dammam, SA (IN); NARAYANA, Dayananda, 560066 Bangalore, Karnataka (IN)
(74) Representative: Foster, Christopher Michael

(57) **Abstract**

A method for treating a coated article (100) having a depleted layer (200) following exposure of the coated article (100) to an operational temperature is disclosed. The method includes applying an aluminizing composition (304) to the article (100), forming an overlay aluminide coating (300) on the article (100) from the aluminizing composition (304), heat treating the overlay aluminide coating (300), and diffusing aluminum from the overlay aluminide coating (300) into the depleted layer (200), transforming at least a portion (204) of the depleted layer (200) into a rejuvenated layer (302). The depleted layer (200) includes a depleted concentration of aluminum relative to a corresponding layer (104) of the coated article (100) prior to the coated article (100) being exposed to the operational temperature. The rejuvenated layer (302) includes a rejuvenated concentration of aluminum which is elevated relative to the depleted concentration of aluminum.

## Description

### FIELD OF THE INVENTION

The present invention is directed to methods for treating coated articles and treated articles. More particularly, the present invention is directed to methods for treating coated articles having depleted layers following exposure of the coated articles to operational temperatures and treated articles having rejuvenated layers.

### BACKGROUND OF THE INVENTION

Gas turbines include components, such as blades (buckets), welded blade (buckets) tips, vanes (nozzles), shrouds, combustor liner, transition ducts, cross fire tube collars, venturis, transition piece seals, fuel nozzle parts, and other hot gas path components which are coated to protect the components from the extreme temperatures, chemical environments and physical conditions found within the gas turbines. Under operating conditions, certain coating systems, such as aluminide diffusion coatings, may be depleted, partially or entirely, of aluminum, which necessitates the repair or replacement of the article to which the diffusion coating is applied. One method of repairing such articles is to strip the depleted diffusion coating and reapply a new diffusion coating in its place. However, stripping and recoating the article is time-intensive, and can significantly lengthen the servicing downtimes of the gas turbine. Further, in some instances, stripping may damage the article.

### BRIEF DESCRIPTION OF THE INVENTION

In an exemplary embodiment, a method for treating a coated article having a depleted layer following exposure of the coated article to an operational temperature includes applying an aluminizing composition to the coated article, forming an overlay aluminide coating on the coated article from the aluminizing composition, heat treating the overlay aluminide coating, and diffusing aluminum from the overlay aluminide coating into the depleted layer, transforming at least a portion of the depleted layer into a rejuvenated layer, and forming a treated article. The depleted layer includes a depleted concentration of aluminum which is reduced relative to an initial concentration of aluminum in a corresponding layer of the coated article prior to the coated article being exposed to the operational temperature, and the rejuvenated layer includes a rejuvenated concentration of aluminum which is elevated relative to the depleted concentration of aluminum.

In another exemplary embodiment, treated article includes a substrate, a rejuvenated aluminide layer disposed on the substrate, and an overlay aluminide coating disposed on the rejuvenated aluminide layer. The rejuvenated aluminide layer is derived from rejuvenation of a depleted aluminide layer. The depleted aluminide layer is derived from a corresponding layer of a coated article present prior to the coated article being exposed to an operational temperature which forms the depleted aluminide layer.

Other features and advantages of the present invention will be apparent from the following more detailed description of the preferred embodiment, taken in conjunction with the accompanying drawings, which illustrate, by way of example, the principles of the invention.

### BRIEF DESCRIPTION OF THE DRAWINGS

FIG. 1 is a sectional view of a coated article, according to an embodiment of the present disclosure.
FIG. 2 is a sectional view of the coated article of FIG. 1 following exposure to an operational temperature, according to an embodiment of the present disclosure.
FIG. 3 is a sectional view of a treated article showing rejuvenation of the coated article of FIG. 2, according to an embodiment of the present disclosure.
FIG. 4 is a micrograph of the coated article of FIG. 2, according to an embodiment of the present disclosure.
FIG. 5 is a micrograph of the treated article of FIG. 3, according to an embodiment of the present disclosure.
FIG. 6 is a sectional view of the treated article of FIG. 3 following exposure to an operational temperature, according to an embodiment of the present disclosure.
FIG. 7 is a sectional view of the treated article of FIG. 6 following further rejuvenation of, according to an embodiment of the present disclosure.

Wherever possible, the same reference numbers will be used throughout the drawings to represent the same parts.

### DETAILED DESCRIPTION OF THE INVENTION

Provided are exemplary methods for treating coated articles and treated articles. Embodiments of the present disclosure, in comparison to methods and articles not utilizing one or more features disclosed herein, increase process efficiency, reduce application costs, reduce maintenance costs, decrease service downtimes, increase service lifetime, decrease or eliminate topologically close packed phases in the coatings, decrease or eliminate aluminum gradients in the coatings, or a combination thereof.

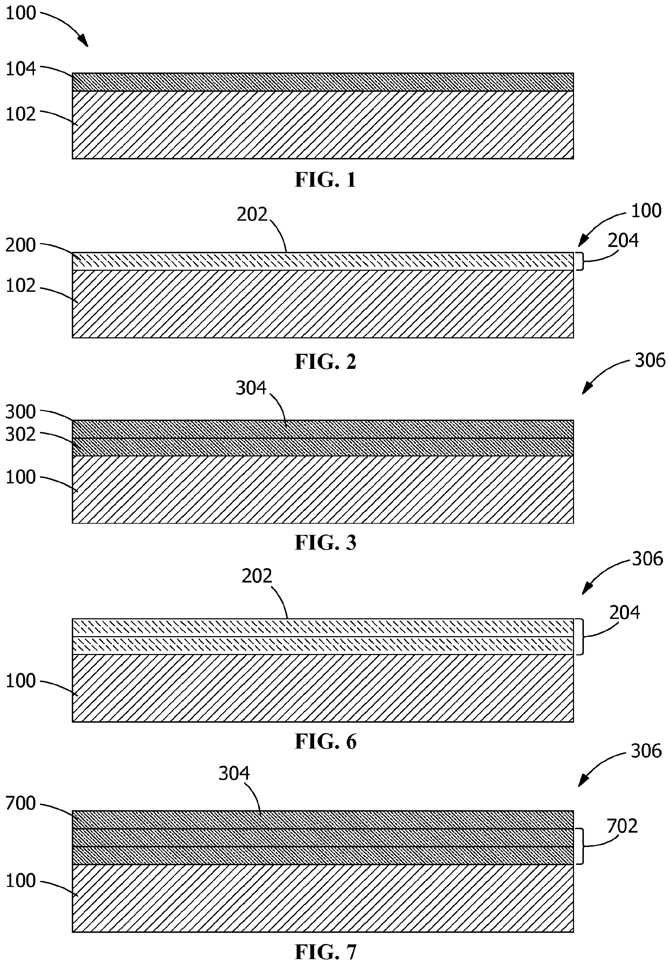

Referring to FIG. 1, a coated article 100 includes a substrate 102, and a corresponding layer 104 (referred to as "corresponding" because it is used as a reference for comparison below) disposed on the substrate 102. The corresponding layer 104 includes an initial concentration of aluminum. The substrate 102 may be any suitable substrate, including, but not limited to, an iron-based superalloy, a nickel-based superalloy, a cobalt-based superalloy, a steel alloy, a nickel-based alloy, a cobalt-based alloy, or combinations thereof.

Referring to FIG. 2, following an exposure to an operational temperature, a portion or the entirety of the corresponding layer 104 (as shown in FIG. 1) is converted to a depleted layer 200. The depleted layer 200 includes a depleted concentration of aluminum, which is reduced relative to the initial concentration of aluminum in the corresponding layer 104. The operational temperature may be any temperature which depletes aluminum from the corresponding layer 104, including, but not limited to, an operational temperature of at least about 1,000 °C, alternatively at least about 1,200 °C, alternatively at least about 1,400 °C, alternatively at least about 1,600 °C, alternatively between about 1,000 °C and about 1,600 °C. Without being bound by theory, it is believed under exposure to the operational temperature, particularly under operational conditions of the coated article, some or all of the initial concentration of aluminum in the corresponding layer 104 migrates to an adjacent layer or forms an aluminum oxide layer at an exposed surface 202 of depleted layer 200.

In one embodiment, the concentration of aluminum of the depleted layer 200 is reduced by any suitable amount relative to the initial concentration of aluminum in the corresponding layer 104 of the coated article 100 prior to the coated article 100 being exposed to the operational temperature. Suitable reductions of aluminum include, but are not limited to, at least about 10%, alternatively at least about 25%, alternatively at least about 50%, alternatively at least about 75%, alternatively about 100%, alternatively, between about 10% and about 100%, alternatively between about 25% and about 100%, alternatively between about 10% and about 90%, alternatively between about 25% and about 75%.

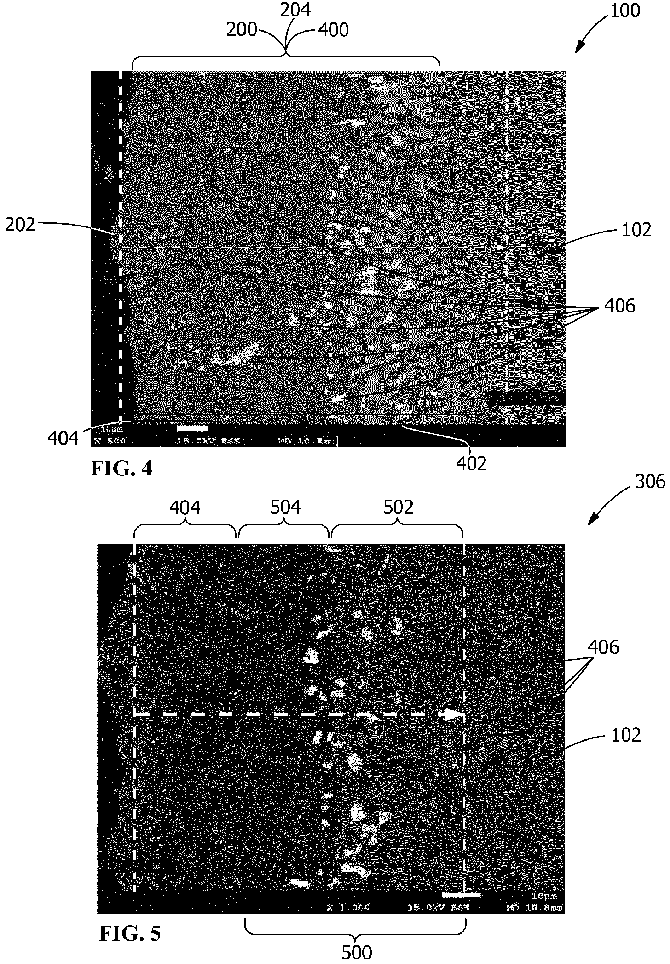

Referring to FIGS. 1-3, in one embodiment, a method for treating the coated article 100 having a depleted layer 200 following exposure of the coated article 100 to an operational temperature (*see* e.g., FIG. 4) includes applying an aluminizing composition 304 to the coated article, forming an overlay aluminide coating 300 on the coated article from the aluminizing composition 304. The overlay aluminide coating 300 is heat treated, and aluminum diffuses from the overlay aluminide coating 300 into the depleted layer 200, transforming at least a portion 204 of the depleted layer 200 into a rejuvenated layer 302, and forming a treated article 306 (*see* e.g., FIG. 5). The depleted layer 200 includes a depleted concentration of aluminum which is reduced relative to an initial concentration of aluminum in the corresponding layer 104 of the coated article 100 prior to the coated article 100 being exposed to the operational temperature, and the rejuvenated layer 302 includes a rejuvenated concentration of aluminum which is elevated relative to the depleted concentration of aluminum. The corresponding layer 104 and the depleted layer 200 may be derived from the aluminizing composition 304, or from another aluminizing process or material.

In one embodiment, the method for treating the coated article 100 having the depleted layer 200 following exposure of the coated article 100 to the operational temperature includes commencing a servicing period throughout which the operational of the coated article 100 ceases. During the servicing period, the coated article 100 may be accessed in place or the coated article 100 may be disassembled from an apparatus to which the coated article 100 is affixed. In a further embodiment, the depleted layer 200 is not stripped (partially or entirely) from the coated article 100 during the service period. In another embodiment, the method is performed without applying MCrAlY over the depleted layer 200 during the service period.

Applying the aluminizing composition 304 may include any suitable technique, including, but not limited to, soaking, spraying, brushing, dipping, pouring, or combinations thereof. The aluminizing composition 304 may be applied directly to the depleted layer 200 or there may be additional material (not shown) disposed between the depleted layer 200 and the aluminizing composition 304. The additional material may include, but is not limited to, materials deposited on or forming on the coated article 100 while the coated article 100 is under operating conditions, an electroplated element or alloy layer such as, but not limited to, nickel, cobalt, chromium, aluminum, and combinations thereof, or both. In one embodiment, wherein additional material is present on the coated article 100, the additional material is removed prior to applying the aluminizing composition 304.

The coated article 100 may be any suitable article, including, but not limited to, a turbine component. Suitable turbine components may include, but are not limited to, hot gas path components, blades (buckets), welded blade (bucket) tips, vanes (nozzles), shrouds, combustor liners, transition ducts, cross fire tube collars, venturis, transition piece seals, fuel nozzle parts, or combinations thereof.

In one embodiment, heat treating includes heating the overlay aluminide coating 300 and the depleted layer 200 to a temperature within a range of about 1,000 °C to about 1,400 °C, alternatively within a range of about 1,100 °C to about 1,300 °C. The heat treating may include any heating duration, including, but not limited to, a duration of from about 1 hour to about 12 hours, alternatively about 2 hours to about 8 hours, alternatively about 4 hours to about 6 hours, alternatively less than about 8 hours, alternatively less than about 6 hours.

The rejuvenated concentration of aluminum in the rejuvenated layer 302 may be any suitable concentration of aluminum. In one embodiment, the rejuvenated concentration of aluminum in the rejuvenated layer 302 is between about 50% to about 100% of the initial concentration of aluminum in the corresponding layer 104, alternatively between about 75% to about 100% of the initial concentration of aluminum in the corresponding layer 104, alternatively between about 90% to about 100% of the initial concentration of aluminum in the corresponding layer 104, alternatively between about 75% to about 95% of the initial concentration of aluminum in the corresponding layer 104, alternatively between about 75% to about 99% of the initial concentration of aluminum in the corresponding layer 104.

The portion 204 of the depleted layer 200 which is transformed into the rejuvenated layer 302 may be the entirety of the depleted layer 200 (shown in FIGS. 2 and 3), or may be any suitable portion 204 less than the entirety of the depleted layer 200. In one embodiment, the portion 204 of the depleted layer 200 which is transformed into the rejuvenated layer 302 is at least about 25% of the depleted layer 200, alternatively at least about 50% of the depleted layer 200, alternatively at least about 75% of the depleted layer 200, alternatively at least about 90% of the depleted layer 200, alternatively at least about 95% of the depleted layer 200, alternatively between about 25% to about 100% of the depleted layer 200, alternatively between about 50% to about 99% of the depleted layer 200, alternatively between about 50% to about 95% of the depleted layer 200.

In one embodiment, the aluminizing composition 304 is a slurry including a donor powder, an activator powder, and a binder. The donor powder includes a metallic aluminum alloy having a melting temperature higher than aluminum (melting point of about 660 °C), and the binder includes at least one organic polymer gel. The aluminizing composition 304 may include any suitable composition, including, but not limited to, a composition having, by weight, about 35 to about 65% of the donor powder, about 1 to about 25% of the activator powder, and about 25 to about 60% of the binder.

The donor powder of the aluminizing composition 304 may include a metallic aluminum alloyed with chromium, iron, another aluminum alloying agent, or a combination thereof, provided that the alloying agent does not deposit during the diffusion aluminizing process, but instead serves as an inert carrier for the aluminum of the donor material. In one embodiment, the donor powder includes a chromium-aluminum alloy such as, but not limited to, by weight, 44% aluminum, balance chromium and incidental impurities. In another embodiment, the donor metal powder has a particle size of up to 100 mesh (149 µm), alternatively up to -200 mesh (74 µm). Without being bound by theory, it is believed that the donor powder being a fine powder reduces the likelihood that the donor powder will become lodged or entrapped.

The activator powder may include any suitable material, including, but not limited to, ammonium chloride, ammonium fluoride, ammonium bromide, another halide activator or combinations thereof. Suitable materials for the activator powder react with aluminum in the donor powder to form a volatile aluminum halide, such as, but not limited to, AlCl₃ or AoF₃, which reacts to deposit and diffuse aluminum.

The at least one organic polymer gel may include, but is not limited to, a polymeric gel available under the name Vitta Braz-Binder Gel from the Vitta Corporation, and low molecular weight polyols such as polyvinyl alcohol. In one embodiment, the binder further includes a cure catalyst, an accelerant, or both, such as, but not limited to, sodium hypophosphite.

The aluminizing composition 304 may be free of inert fillers and inorganic binders. The absence of inert fillers and inorganic binders may prevent such materials from sintering and becoming entrapped.

The overlay aluminide coating 300 includes forming the overlay aluminide coating on a local portion of the article, the local portion being less than an entire surface of the article.

Referring to FIGS. 1 and 3, the overlay aluminide coating 300 and the rejuvenated layer 302 may be free of an aluminum compositional gradient, or may have a reduced aluminum compositional gradient relative to the corresponding layer 104 of the coated article 100 prior to the coated article 100 being exposed to the operational temperature.

Referring to FIGS. 4 and 5, in one embodiment, the depleted layer 200 is a depleted aluminide layer 400 including at least one of a depleted additive aluminide coating 404 and a depleted aluminide interdiffusion zone 402. Transforming at least the portion 204 of the depleted layer into the rejuvenated layer includes reducing or eliminating any topologically close packed phases 406 present in the depleted aluminide layer 400. The topologically close packed phases 406, which are also present in the corresponding layer 104 (corresponding layer 104 shown in FIG. 1, although topologically close packed phases 406 are not), are typically brittle phases derived from interaction of the corresponding layer 104 with the substrate 102. Topologically close packed phases 406 may be formed during a diffusion heat treatment forming the corresponding layer 104 on the substrate 102 due to differential diffusivities at the processing temperature. Upon rejuvenation heat treatment, topologically close packed phases 406 may tend to dissolve, forming a more uniform interface.

Referring to FIGS. 6 and 7, in one embodiment, the method for treating the coated article 100 further includes exposing the treated article 306 to the operational temperature following transforming at least the portion 204 of the depleted layer 200 into the rejuvenated layer 302. Exposure of the treated article 306 to the operation temperature may occur during the service period or following the service period. Exposure of the treated article 306 to the operational temperature forms a second depleted layer 600 from the rejuvenated layer 302 (shown in FIG. 3) and the overlay aluminide coating 300. If the exposure of the treated article 306 did not occur during the service period, a second service period may be commenced following the exposure. Subsequently, the aluminizing composition 304 is applied to the treated article 306, forming a second overlay aluminide coating 700 on the treated article 306 from the aluminizing composition 304, the second overlay aluminide coating 700 is heat treated, and diffusing aluminum from the second overlay aluminide coating 700 into the second depleted layer 600, transforming at least a portion 204 of the second depleted layer 600 into a second rejuvenated layer 702. This sequence of exposure of the treated article 306 to the operational temperatures followed by rejuvenation may be repeated any suitable number of times, including, but not limited to, one repetition, two repetitions, three repetitions, four repetitions, or more.

Referring to FIGS. 1 and 3-5, in one embodiment, a treated article 306 includes a substrate 102, a rejuvenated aluminide layer 500 disposed on the substrate 102, and an overlay aluminide coating 300 disposed on the rejuvenated aluminide layer 500. The rejuvenated aluminide layer 500 is derived from rejuvenation of a depleted aluminide layer 400. The depleted aluminide layer 400 is derived from a corresponding layer 104 (of a coated article 100 present prior to the coated article 100 being exposed to an operational temperature which forms the depleted aluminide layer 400. The rejuvenated aluminide layer 500 may include a rejuvenated aluminide interdiffusion zone 502 and a rejuvenated additive aluminide coating 504.

In one embodiment, the rejuvenated aluminide layer 500 is free of topologically close packed phases 406, or has reduced topologically close packed phases 406 relative to the corresponding layer 104 of the coated article 100 present prior to the coated article 100 being exposed to the operational temperature.

In another embodiment, the overlay aluminide coating 300 and the rejuvenated aluminide layer 500 are free of an aluminum compositional gradient, or have a reduced aluminum compositional gradient relative to the at least one corresponding layer 104 of the coated article 100 present prior to the coated article 100 being exposed to the operational temperature.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A method for treating a coated article having a depleted layer following exposure of the coated article to an operational temperature, comprising:
   applying an aluminizing composition to the coated article;
   forming an overlay aluminide coating on the coated article from the aluminizing composition;
   heat treating the overlay aluminide coating; and
   diffusing aluminum from the overlay aluminide coating into the depleted layer, transforming at least a portion of the depleted layer into a rejuvenated layer, and forming a treated article,
   wherein the depleted layer includes a depleted concentration of aluminum which is reduced relative to an initial concentration of aluminum in a corresponding layer of the coated article prior to the coated article being exposed to the operational temperature, and the rejuvenated layer includes a rejuvenated concentration of aluminum which is elevated relative to the depleted concentration of aluminum.
2. The method of clause 1, further including:
   exposing the treated article to the operational temperature following transforming at least the portion of the depleted layer into the rejuvenated layer;
   forming a second depleted layer from the rejuvenated layer and the overlay aluminide coating; and
   subsequently applying the aluminizing composition to the treated article, forming a second overlay aluminide coating on the treated article from the aluminizing composition, heat treating the second overlay aluminide coating, and diffusing aluminum from the second overlay aluminide coating into the second depleted layer, transforming at least a portion of the second depleted layer into a second rejuvenated layer.
3. The method of clause 1, wherein the depleted layer is a depleted aluminide layer including at least one of a depleted additive aluminide coating and a depleted aluminide interdiffusion zone.
4. The method of clause 2, wherein transforming at least the portion of the depleted layer into the rejuvenated layer includes reducing or eliminating topologically close packed phases present in the depleted aluminide layer.
5. The method of clause 1, wherein the overlay aluminide coating and the rejuvenated layer are free of an aluminum compositional gradient, or have a reduced aluminum compositional gradient relative to the corresponding layer of the coated article prior to the coated article being exposed to the operational temperature.
6. The method of clause 1, wherein the concentration of aluminum of the depleted layer is reduced by at least about 10% relative to the initial concentration of aluminum in the corresponding layer of the coated article prior to the coated article being exposed to the operational temperature.
7. The method of clause 1, wherein the aluminizing composition includes, by weight, about 35 to about 65% of a donor powder, about 1 to about 25% of an activator powder, and about 25 to about 60% of a binder, the donor powder including a metallic aluminum alloy having a melting temperature higher than aluminum, and the binder including at least one organic polymer gel.
8. The method of clause 1, wherein forming the overlay aluminide coating includes forming the overlay aluminide coating on a local portion of the coated article, the local portion being less than an entire surface of the coated article.
9. The method of clause 1, including commencing a servicing period of an apparatus during which operation of the apparatus ceases, the apparatus including the coated article.
10. The method of clause 8, wherein the method is performed without stripping the depleted layer from the coated article during the service period and without applying MCrAlY over the depleted layer during the service period.
11. The method of clause 1, wherein applying the aluminizing composition includes a technique selected from the group consisting of soaking, spraying, brushing, dipping, pouring, and combinations thereof.
12. The method of clause 1, wherein the coated article is a turbine component.
13. The method of clause 12, wherein the turbine component is selected from the group consisting of at least one of a hot gas path component, a blade (bucket), a welded blade (bucket) tip, a vane (nozzle), a shroud, a combustor liner, a transition duct, a cross fire tube collar, a venturi, a transition piece seal, a fuel nozzle part, and combinations thereof.
14. The method of clause 1, wherein the operational temperature is at least about 1,000 °C.
15. The method of clause 1, wherein the heat treating includes subjecting the overlay aluminide coating to a temperature between about 1,100 °C to about 1,300 °C.
16. The method of clause 1, wherein the rejuvenated concentration of aluminum is between about 75% to about 100% of the initial concentration of aluminum.
17. The method of clause 1, wherein the portion of the depleted layer which is transformed into the rejuvenated layer is at least about 50% of the depleted layer.
18. A treated article comprising:
   a substrate;
   a rejuvenated aluminide layer disposed on the substrate, the rejuvenated aluminide layer being derived from rejuvenation of a depleted aluminide layer, the depleted aluminide layer being derived from a corresponding layer of a coated article present prior to the coated article being exposed to an operational temperature which forms the depleted aluminide layer; and
   an overlay aluminide coating disposed on the rejuvenated aluminide layer.
19. The coated article of clause 18, wherein the rejuvenated aluminide layer is free of topologically close packed phases, or has reduced topologically close packed phases relative to the corresponding layer of the coated article present prior to the coated article being exposed to the operational temperature.
20. The coated article of clause 18, wherein the overlay aluminide coating and the rejuvenated aluminide layer are free of an aluminum compositional gradient, or have a reduced aluminum compositional gradient relative to the at least one corresponding layer of the coated article present prior to the coated article being exposed to the operational temperature.

## Claims

1. A method for treating a coated article (100) having a depleted layer (200) following exposure of the coated article (100) to an operational temperature, comprising:
applying an aluminizing composition (304) to the coated article (100);
forming an overlay aluminide coating (300) on the coated article (100) from the aluminizing composition (304);
heat treating the overlay aluminide coating (300); and
diffusing aluminum from the overlay aluminide coating (300) into the depleted layer (200), transforming at least a portion (204) of the depleted layer (200) into a rejuvenated layer (302), and forming a treated article (306),
wherein the depleted layer (200) includes a depleted concentration of aluminum which is reduced relative to an initial concentration of aluminum in a corresponding layer (104) of the coated article (100) prior to the coated article (100) being exposed to the operational temperature, and the rejuvenated layer (302) includes a rejuvenated concentration of aluminum which is elevated relative to the depleted concentration of aluminum.

2. The method of claim 1, further including:
exposing the treated article (306) to the operational temperature following transforming at least the portion (204) of the depleted layer (200) into the rejuvenated layer (302);
forming a second depleted layer (600) from the rejuvenated layer (302) and the overlay aluminide coating (300); and
subsequently applying the aluminizing composition (304) to the treated article (306), forming a second overlay aluminide coating (700) on the treated article (306) from the aluminizing composition (304), heat treating the second overlay aluminide coating (700), and diffusing aluminum from the second overlay aluminide coating (700) into the second depleted layer (600), transforming at least a portion (204) of the second depleted layer (600) into a second rejuvenated layer (702).

3. The method of claim 1 or claim 2, wherein the depleted layer (200) is a depleted aluminide layer (400) including at least one of a depleted additive aluminide coating (404) and a depleted aluminide interdiffusion zone (402).

4. The method of any preceding claim, wherein transforming at least the portion of the depleted layer (200) into the rejuvenated layer (302) includes reducing or eliminating topologically close packed phases (406) present in the depleted aluminide layer (400).

5. The method of any preceding claim, wherein the overlay aluminide coating (300) and the rejuvenated layer (302) are free of an aluminum compositional gradient, or have a reduced aluminum compositional gradient relative to the corresponding layer (104) of the coated article (100) prior to the coated article (100) being exposed to the operational temperature.

6. The method of any preceding claim, wherein the concentration of aluminum of the depleted layer (200) is reduced by at least about 10% relative to the initial concentration of aluminum in the corresponding layer (104) of the coated article (100) prior to the coated article (100) being exposed to the operational temperature.

7. The method of any preceding claim, wherein the aluminizing composition (304) includes, by weight, about 35 to about 65% of a donor powder, about 1 to about 25% of an activator powder, and about 25 to about 60% of a binder, the donor powder including a metallic aluminum alloy having a melting temperature higher than aluminum, and the binder including at least one organic polymer gel.

8. The method of any preceding claim, including commencing a servicing period of an apparatus during which operation of the apparatus ceases, the apparatus including the coated article (100).

9. The method of claim 8, wherein the method is performed without stripping the depleted layer (200) from the coated article (100) during the service period and without applying MCrAlY over the depleted layer (200) during the service period.

10. The method of any preceding claim, wherein the coated article (104) is a turbine component selected from the group consisting of at least one of a hot gas path component, a blade (bucket), a welded blade (bucket) tip, a vane (nozzle), a shroud, a combustor liner, a transition duct, a cross fire tube collar, a venturi, a transition piece seal, a fuel nozzle part, and combinations thereof.

11. The method of any preceding claim, wherein the operational temperature is at least about 1,000 °C.

12. The method of any preceding claim, wherein the heat treating includes subjecting the overlay aluminide coating (300) to a temperature between about 1,100 °C to about 1,300 °C.

13. The method of any preceding claim, wherein the rejuvenated concentration of aluminum is between about 75% to about 100% of the initial concentration of aluminum.

14. The method of any preceding claim, wherein the portion (204) of the depleted layer (200) which is transformed into the rejuvenated layer (302) is at least about 50% of the depleted layer (200).

15. A treated article (306) comprising:
a substrate (102);
a rejuvenated aluminide layer (500) disposed on the substrate (102), the rejuvenated aluminide layer (500) being derived from rejuvenation of a depleted aluminide layer (400), the depleted aluminide layer (400) being derived from a corresponding layer (104) of a coated article (100) present prior to the coated article (100) being exposed to an operational temperature which forms the depleted aluminide layer (400); and
an overlay aluminide coating (300) disposed on the rejuvenated aluminide layer (500).
